# EUROPÄISCHE PATENTANMELDUNG

(11) **EP 0 758 094 A2**
(43) Veröffentlichungstag der Anmeldung: **12.02.1997**
(21) Anmeldenummer: 96112123.3
(22) Anmeldetag: 26.07.1996
(51) Int. Cl.: G01S 15/89

(54) **Verfahren und Anordnung zum Abbilden eines Objekts mit Ultraschall mit störungsfreier Empfangssignalübertragung**

(30) Priorität: 08.08.1995 DE 19529158
(71) Anmelder: SIEMENS AKTIENGESELLSCHAFT, 80333 München (DE)
(72) Erfinder: Oppelt, Ralph, Dr., 91080 Uttenreuth (DE)

(57) **Zusammenfassung**

Die Sendedaten für einen Sendemodus eines nach der Puls-Echo-Methode betriebenen Ultraschallarrays (2) werden nicht während des vorhergehenden Empfangsmodus, sondern während des vorhergehenden Sendemodus übertragen und gespeichert. Dadurch unterbleiben Störungen der Empfangssignale durch die Sendedatenübertragung.

## Beschreibung

Die Erfindung betrifft ein Verfahren und eine Anordnung zum Abbilden eines Objekts mit Ultraschall.

In der medizinischen Diagnostik und der zerstörungsfreien Werkstoffprüfung sind Verfahren und Anordnungen zum Abbilden eines Raumgebiets des menschlichen Körpers bzw. des zu prüfenden Werkstoffs mit Hilfe der Puls-Echo-Methode bekannt. Das abzubildende Objekt wird mit Ultraschallpulsen beschallt und aus den im Objekt reflektierten Ultraschallechopulsen wird von einer Signalverarbeitungseinheit ein Ultraschallbild aufgebaut, das im allgemeinen einem zweidimensionalen Schnitt durch das Objekt entspricht. Zum Senden und Empfangen der Ultraschallpulse sind eindimensionale lineare Arrays und zweidimensionale, insbesondere matrixförmige Arrays von piezoelektrischen Wandlerelementen bekannt. Die Wandlerelemente des Arrays werden zum Senden von Ultraschall zu individuellen Sendezeitpunkten angeregt. Durch Einstellen der Zeitverzögerungen zwischen den einzelnen Sendezeitpunkten kann man mit dem Array einen schwenkbaren und auf das Objekt fokussierbaren Ultraschallstrahl senden (phased array). Bei einem linearen Array ist der Ultraschallstrahl in einer von der Normalen zur Arrayoberfläche und der Arrayachse aufgespannten Ebene und somit in nur einer Winkelrichtung schwenkbar, während bei einem zweidimensionalen Array der Ultraschallstrahl in einem Raumwinkelbereich um die Flächennormale und damit in zwei Winkelrichtungen schwenkbar ist. Die Dauer eines Sendemodus ist durch die maximale Verzögerungszeit zwischen dem zuerst angesteuerten Wandlerelement und dem zuletzt angesteuerten Wandlerelement festgelegt, die beispielsweise 15 µs betragen kann. In einem auf den Sendemodus folgenden Empfangsmodus werden die vom Objekt reflektierten Echopulse von den Wandlerelementen des Arrays empfangen und in elektrische Empfangssignale umgewandelt. Die Dauer eines Empfangsmodus ist von den an den am tiefsten liegenden Zonen im Objekt reflektierten und damit am spätestens ankommenden Echopulsen bestimmt und betragt beispielsweise etwa 250 µs. Im allgemeinen wird eine vorgegebene Anzahl von Sende-Empfangs-Zyklen durchgeführt, die jeweils einen Sendemodus und einen zugehörigen Empfangsmodus umfassen, zum Abtasten (scanning) des Objekts.

Die Sendezeitpunkte für jeden Sendemodus werden während des unmittelbar vorausgehenden Empfangsmodus des vorhergehenden Sende-Empfangs-Zyklus übertragen und in einen Speicher geschrieben. Zum Einspeichern jedes Sendezeitpunktes steht somit eine Zeit zur Verfügung, die maximal der Dauer des Empfangsmodus dividiert durch die Anzahl der Wandlerelemente entspricht. Bei einem eindimensionalen Array mit beispielsweise 128 Wandlerelementen ergibt sich daraus unter Ausnutzung der gesamten Empfangsdauer eine Datentransferfrequenz von etwa 500 kHz. Bei einem zweidimensionalen Array von typischerweise etwa 4000 Wandlerelementen liegt die Datentransferfrequenz bereits bei etwa 16 MHz.

Ein Problem stellen Störungen der Empfangssignale (digital noise oder semi-random-spectrum) durch die zeitlich parallel ablaufende Übertragung der Sendezeitpunkte in den Sendespeicher dar. Da die Amplituden der Empfangssignale aufgrund der Dämpfung im Objekt innerhalb eines Empfangsmodus kontinuierlich abnehmen, wirken sich diese Störungen besonders am Ende eines Empfangsmodus aus. Aus diesem Grund beschränkt man sich bei der Sendedatenübertragung auf die Anfangsphase eines Empfangsmodus, wahrend der noch starke Echopulse eintreffen und die Störungen der Empfangssignale durch die Sendedatenübertragung vergleichsweise gering sind. Werden nun beispielsweise nur die ersten 10 % der Empfangsdauer verwendet, so steigt die Datentransferfrequenz für die Sendezeitpunkte entsprechend um einen Faktor 10 an. Das hat bei einem eindimensionalen Array in dem vorgenannten Zahlenbeispiel eine Datentransferfrequenz von etwa 5 MHz und bei dem obengenannten zweidimensionalen Array eine Datentransferfrequenz von bereits 160 MHz zur Folge. Eine Datentransferfrequenz von 160 MHz ist bei handelsüblichen Speichern bereits problematisch.

Aus *WO 95/02197* ist ein Ultraschallabbildungssystem bekannt mit einem Applikator (Wandlerkopf), der ein Array von Wandlerelementen enthält, und mit einem Hauptgerät zum zeitverzögerten Ansteuern der Wandlerelemente des Arrays. Der Applikator enthält einen Adreßdecoder und für jedes Wandlerelement jeweils einen Sendepulsgeber. Der Adreßdecoder dekodiert digitale Adressen für die Sendepulsgeber, die vom Hauptgerät über Adreßleitungen zum Applikator übertragen werden. Die Startzeiten für die Sendepulse werden digital über den Wandlerelementen gemeinsame Startzeitleitungen (Datenbus) vom Hauptgerät zum Applikator übertragen. Ferner sind der Applikator und das Hauptgerät über einzelne Steuerleitungen und Versorgungsleitungen für den Sendefall verbunden. Für den Empfangsfall sind im Applikator ein Multiplexer und im Hauptgerät ein Demultiplexer vorgesehen, die über Signalleitungen miteinander verbunden sind. Über jede Signalleitung wird jeweils eine Gruppe von gemultiplexten Empfangssignalen verschiedener Wandlerelemente übertragen. Die Übertragung der Empfangssignale kann über Frequenzmultiplexen oder auch Zeitmultiplexen geschehen. Die Anzahl der Empfangsleitungen ist somit gegenüber einer individuellen Verdrahtung der Wandlerelemente um den Multiplexfaktor des Multiplexverfahrens reduziert. Durch diese Maßnahmen ist auch die Gesamtzahl der Leitungen zwischen Applikator und Hauptgerät insbesondere bei einem zweidimensionalen Array erheblich verkleinert. Bei einem solchen bekannten Ultraschallabbildungssystem können die Störungen durch die Übertragung und Speicherung der Sendedaten auf die Empfangssignale sich noch stärker auswirken, da die Empfangsleitungen und die Steuerleitungen zum Übertragen der Sendedaten im allgemeinen über eine lange Strecke in einem Kabelstrang parallel laufen.

Der Erfindung liegt nun die Aufgabe zugrunde, ein Verfahren und eine Anordnung zum Abbilden eines Objekts mit Ultraschall nach der Puls-Echo-Methode anzugeben, bei denen die Empfangssignale durch die Übertragung und Speicherung der Sendedaten praktisch nicht gestört werden.

Diese Aufgabe wird gemäß der Erfindung gelöst mit den Merkmalen des Anspruchs 1 bzw. des Anspruchs 7.

Die Erfindung beruht auf der Überlegung, die für die Wandlerelemente eines Ultraschallarrays vorgesehenen, individuellen Sendezeitpunkte für jeden Sendemodus wahrend eines vorausgehenden Sendemodus zu speichern. Dadurch werden Störungen durch das Speichern der Sendedaten auf die Empfangssignale vermieden, da während der Empfangsmoden eine Sendedatenübertragung und -speicherung unterbleibt.

Das Verfahren zum Abbilden eines Objekts mit Ultraschall umfaßt folgende Verfahrensschritte:
a) es wird eine vorbestimmte Anzahl von Sende-Empfangs-Zyklen ("Puls-Echo-Zyklen") durchgeführt;
b) wahrend jedes Sende-Empfangs-Zyklus wird zunächst in einem Sendemodus auf das Objekt richtbarer Ultraschall gesendet, indem für jedes Wandlerelement eines Arrays ein zugehöriger Sendezeitpunkt aus einer Speichereinrichtung ausgelesen wird und jedes Wandlerelement des Arrays zu diesem zugehörigen Sendezeitpunkt mit einem zugehörigen Sendepuls angesteuert wird, und danach wird in einem Empfangsmodus vom Objekt reflektierter Ultraschall von den Wandlerelementen des Arrays in elektrische Empfangssignale umgewandelt;
c) während des Sendemodus jedes Sende-Empfangs-Zyklus werden die Sendezeitpunkte für den Sendemodus eines der darauffolgenden Sende-Empfangs-Zyklen in die Speichereinrichtung eingeschrieben;
d) die aus den Sende-Empfangs-Zyklen erhaltenen Empfangssignale der Wandlerelemente werden zum Aufbau eines Bildes des Objekts verwendet.

Die Anordnung zum Abbilden eines Objekts mit Ultraschall enthält ein Array von Wandlerelementen, eine Speichereinrichtung, einen Sendepulsgenerator, einen Sendezeitgeber und eine Signalverarbeitungseinheit. Der Sendepulsgenerator steuert zum Senden von auf das Objekt richtbarem Ultraschall in einer vorbestimmten Anzahl von Sendemoden die Wandlerelemente des Arrays mit jeweils einem Sendepuls zu jeweils einem in der Speichereinrichtung gespeicherten Sendezeitpunkt an. Der Sendezeitgeber schreibt wahrend jedes Sendemodus die Sendezeitpunkte für einen der darauffolgenden Sendemoden in die Speichereinrichtung. Die Signalverarbeitungseinheit verarbeitet zum Aufbau eines Bildes des Objekts elektrische Empfangssignale, die von den Wandlerelementen in jeweils unmittelbar an jeden Sendemodus anschließenden Empfangsmoden aus vom Objekt reflektiertem Ultraschall erzeugt werden.

Vorteilhafte Ausgestaltungen und Weiterbildungen des Verfahrens und der Anordnung ergeben sich aus den jeweils abhängigen Ansprüchen.

Demnach werden in einer besonders vorteilhaften Ausführungsform wahrend des Sendemodus jedes Sende-Empfangs-Zyklus die Sendezeitpunkte für den Sendemodus des unmittelbar darauffolgenden Sende-Empfangs-Zyklus in die Speichereinrichtung eingeschrieben. Die Speichereinrichtung enthält in dieser Ausführungsform vorzugsweise eine erste Speicherstufe und eine zweite Speicherstufe. Zunächst wird der Inhalt der ersten Speicherstufe in die zweite Speicherstufe geschrieben. Der Sendepulsgenerator entnimmt die für die Wandlerelemente im laufenden Sendemodus vorgesehenen Sendezeitpunkte jeweils der zweiten Speicherstufe. Der Sendezeitgeber schreibt wahrend des laufenden Sendemodus die für den darauffolgenden Sendemodus vorgesehenen jeweiligen Sendezeitpunkte für die Wandlerelemente in die erste Speicherstufe der Speichereinrichtung.

In einer bevorzugten Ausführungsform werden die vom Sendezeitgeber erzeugten Sendezeitpunkte für jeden Sendemodus und die Empfangssignale über gemeinsame Leitungen übertragen. Dadurch können eigene Leitungen zum Übertragen der Sendezeitpunkte entfallen. Vorzugsweise verbinden elektrische Schaltmittel in dieser Ausführungsform in jedem Empfangsmodus das Ultraschallarray mit der Signalverarbeitungseinheit über die gemeinsamen Leitungen und in jedem Sendemodus den Sendezeitgeber mit der Speichereinrichtung über wenigstens einen Teil dieser gemeinsamen Leitungen.

In einer besonderen Ausführungsform werden während des Sendemodus jedes Sende-Empfangszyklus auch Pulsamplitudenwerte für die Sendepulse des Sendemodus eines der darauffolgenden Sende-Empfangs-Zyklen in die Speichereinrichtung geschrieben. Damit kann eine Apodisierung des Ultraschallstrahls erreicht werden.

Die Sendezeitpunkte können einzeln seriell vom Sendezeitgeber zur Speichereinrichtung übertragen werden, vorzugsweise über einen gemeinsamen digitalen Datenbus. In einer besonderen Ausführungsform können zur Verringerung der Datentransferfrequenz allerdings auch mehrere Sendezeitpunkte gleichzeitig vom Sendezeitgeber zur Speichereinrichtung übertragen werden. Es sind dann vorzugsweise mehrere parallele digitale Datenbusse zum Übertragen der Sendezeitpunkte vom Sendezeitgeber zur Speichereinrichtung vorgesehen.

Es kann ein eindimensionales oder ein zweidimensionales Ultraschallarray vorgesehen sein.

Zur weiteren Erläuterung der Erfindung wird auf die Zeichnung Bezug genommen, in deren
- FIG 1: ein Ausführungsbeispiel einer Anordnung zum Abbilden eines Objekts mit Ultraschall mit einer zweistufigen Speichereinrichtung und getrennten Sendeleitungen und Empfangsleitungen,
- FIG 2: ein weiteres Ausführungsbeispiel einer Anordnung zum Abbilden eines Objekts mit Ultraschall mit einer zweistufigen Speichereinrichtung und gemeinsamen Leitungen für den Sendefall und den Empfangsfall und
- FIG 3: eine Ausführungsform einer zweistufigen Speichereinrichtung und eines Sendepulsgenerators für eine Anordnung zum Abbilden eines Objekts mit Ultraschall jeweils schematisch dargestellt sind. Einander entsprechende Teile sind mit denselben Bezugszeichen versehen.

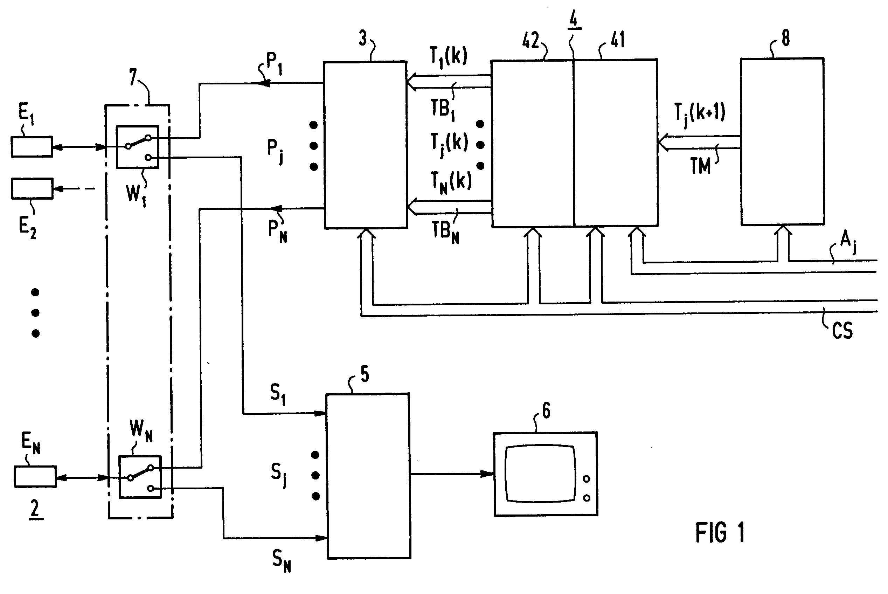

In FIG 1 sind ein Ultraschallarray mit 2, ein Sendepulsgenerator mit 3, eine Speichereinrichtung mit 4, eine erste Speicherstufe der Speichereinrichtung 4 mit 41, eine zweite Speicherstufe der Speichereinrichtung 4 mit 42, eine Signalverarbeitungseinheit mit 5, ein Bildmonitor mit 6, Schaltmittel mit 7 und ein Sendezeitgeber mit 8 bezeichnet. Die Sendepulsgenerator 3 steuert in einem k-ten Sendemodus jedes Wandlerelement Eⱼ des Arrays 2 mit einem zugehörigen Sendepuls Pⱼ für 1 ≤ j ≤ N an. N ist dabei die Anzahl der Wandlerelemente Eⱼ des Arrays 2. Der Index k läuft dabei von dem ersten Sendemodus k=1 bis zum letzten Sendemodus k=K mit einer vorgegebenen Anzahl K von Sende-Empfangs-Zyklen. Jeder Sendepuls Pⱼ weist eine zugehörige Startzeit Tⱼ auf, die im folgenden als Sendezeitpunkt Tⱼ bezeichnet wird. Die Sendezeitpunkte Tⱼ für die einzelnen Wandlerelemente Eⱼ sind zeitlich derart zueinander versetzt, daß das Array 2 einen auf ein nicht dargestelltes Objekt richtbaren Ultraschallstrahl erzeugt (phased array; zeitverzögertes Ansteuern).

Alle N Sendezeitpunkte Tⱼ(k) für einen k-ten Sendemodus werden vorzugsweise als binär kodierte Daten zu Beginn dieses k-ten Sendemodus zeitgleich aus der ersten Speicherstufe 41 der Speichereinrichtung 4 in die zweite Speicherstufe 42 übertragen und von der zweiten Speicherstufe 42 parallel über jeweils einen Datenbus TBⱼ für jeden Sendezeitpunkt Tⱼ(k) an den Sendepulsgenerator 3 weitergeleitet. Dazu werden die erste Speicherstufe 41 und die zweite Speicherstufe 42 der Speichereinrichtung 4 sowie der Sendepulsgenerator 3 jeweils mit einem Schreib-/Leseimpuls (Latchpuls) über einen Steuersignalbus CS angesteuert. Über diesen Steuersignalbus CS können auch weitere Steuersignale wie Clock- und Reset-Pulse übertragen werden. Die Zahl der für die Steuersignale benötigten Bits des Steuersignalbus CS ist vergleichsweise gering, typischerweise kleiner als 10. Mit den aus der Speichereinrichtung 4 erhaltenen Sendezeitpunkten Tⱼ(k) bildet der Sendepulsgenerator 3 im k-ten Sendemodus nun die zugehörigen Sendepulse Pⱼ.

Wahrend dieses k-ten Sendemodus schreibt der Sendezeitgeber 8 die Sendezeitpunkte Tⱼ(k+1) für den unmittelbar darauffolgenden (k+1)-ten Sendemodus über einen Datenbus TM seriell in die erste Speicherstufe 41 der Speichereinrichtung 4. Für jeden Sendezeitpunkt Tⱼ enthalten die beiden Speicherstufen 41 und 42 der Speichereinrichtung 4 jeweils eine nicht dargestellte Speicherzelle. Für das serielle Einschreiben der Sendezeitpunkte Tⱼ (k+1) vom Sendezeitgeber 8 in die erste Speicherstufe 41 der Speichereinrichtung 4 werden im Sendezeitgeber 8 und in der ersten Speicherstufe 41 der Speichereinrichtung 4 über einen gemeinsamen, im allgemeinen ld(N)-Bit-breiten Adreßbus die digitalen Adressen Aⱼ der für die Sendezeitpunkte Tⱼ(k+1) jeweils vorgesehenen Speicherzellen ausgewählt. Das Aussenden der Sendepulse Pⱼ und das Einschreiben der Sendezeitpunkte Tⱼ(k+1) für den (k+1)-ten Sendemodus laufen also zeitlich parallel wahrend des k-ten Sendemodus ab. Es versteht sich, daß die Sendezeitpunkte Tⱼ(1) für den ersten Sendemodus mit k=1 vom Sendezeitgeber 8 vor Beginn dieses ersten Sendemodus in die erste Speicherstufe 41 der Speichereinrichtung 4 geschrieben werden (Initialisierung).

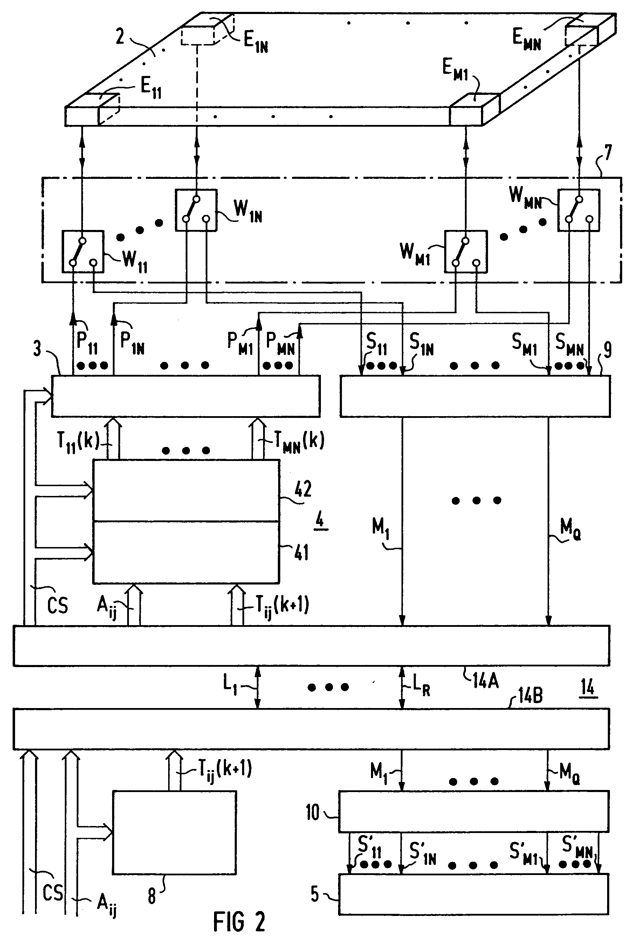

Jeder Sende-Empfangs-Zyklus umfaßt jeweils einen Sendemodus und einen Empfangsmodus. In jedem Empfangsmodus wird beispielsweise an Grenzflachen im Objekt reflektierter Ultraschall von den Wandlerelementen Eⱼ des Arrays 2 in elektrische Empfangssignale Sⱼ umgewandelt. Diese Empfangssignale Sⱼ werden einer Signalverarbeitungseinheit 5 zugeführt. Die Signalverarbeitungseinheit 5 baut aus den Empfangssignalen Sⱼ aller K Empfangsmoden der K Sende-Empfangs-Zyklen ein Bild des Objekts auf, das auf dem Monitor 6 dargestellt werden kann. Zur elektrischen Verbindung der Wandlerelemente Eⱼ des Arrays 2 mit der Sendepulsgenerator 3 im Sendemodus und der Signalverarbeitungseinheit 5 im Empfangsmodus sind elektrische Schaltmittel 7 vorgesehen mit jeweils einem Duplexer W₁ bis W_{N} für jedes Wandlerelement E₁ bis E_{N}. Jeder Duplexer Wⱼ verbindet das zugehörige Wandlerelement Eⱼ im Sendemodus mit der Sendepulsgenerator 3 und im Empfangsmodus mit der Signalverarbeitungseinheit 5. In der FIG 1 sind die Schaltmittel 7 im Betriebszustand für den Sendemodus dargestellt. Die Schaltmittel 7 können mit dem Array 2 in einem Wandlerkopf (Applikator) integriert sein oder auch in einem Hauptgerät (main frame) angeordnet sein und über ein Kabel mit dem Array 2 elektrisch verbunden sein. Das Array 2 kann insbesondere ein eindimensionales oder auch ein zweidimensionales Array sein. In der Ausführungsform gemäß FIG 1 werden die Empfangssignale Sⱼ jedes Wandlerelements Eⱼ zur Signalverarbeitungseinheit 5 über jeweils eine zugeordnete Leitung übertragen (individuelle Verdrahtung). Es ist jedoch auch möglich, die Empfangssignale Sⱼ mehrerer Wandlerelemente Eⱼ durch Verwendung eines Multiplexverfahrens über eine gemeinsame Leitung zu übertragen. Eine solche Ausführungsform ist in FIG 2 dargestellt.

Die FIG 2 zeigt eine Ausführungsform einer Anordnung zum Abbilden eines Objekts mit Ultraschall mit einem zweidimensionalen, vorzugsweise matrixförmigen Ultraschallarray 2. Das dargestellte Array 2 hat M Zeilen und N Spalten von Wandlerelementen Eᵢⱼ mit 1 ≤ i ≤ M und 1 ≤ j ≤ N. Jedes Wandlerelement Eᵢⱼ ist mit einem zugehörigen Duplexer (Sende-Empfangsweiche) Wᵢⱼ von Schaltmitteln 7 elektrisch verbunden. Die Duplexer Wᵢⱼ verbinden die zugehörigen Wandlerelemente Eᵢⱼ mit der Sendepulsgenerator 3 im Sendemodus und einem Multiplexer 9 im Empfangsmodus. Alle M·N Sendezeitpunkte Tᵢⱼ(k) für einen laufenden k-ten Sendemodus werden unmittelbar zu Beginn dieses Sendemodus praktisch zeitlich synchron mit einem Schreib-Lese-Puls aus dem Steuersignalbus CS von der ersten Speicherstufe 41 der Speichereinrichtung 4 in die zweite Speicherstufe 42 geschrieben. Aus der zweiten Speicherstufe 42 werden die Sendezeitpunkte Tᵢⱼ(k) über jeweils einen zugeordneten, nicht näher bezeichneten Datenbus parallel an den Sendepulsgenerator 3 weitergeleitet. Während des aktuellen k-ten Sendemodus werden nun vom Sendepulsgenerator 3 aus den Sendezeitpunkte Tᵢⱼ(k) die Sendepulse Pᵢⱼ zur Ansteuerung der Wandlerelemente Eᵢⱼ generiert und zu den jeweiligen Sendezeitpunkten Tᵢⱼ(k) an die Wandlerelemente Eᵢⱼ abgeschickt.

Wahrend der k-te Sendemodus läuft, werden die Sendezeitpunkte Tᵢⱼ(k+1) für den darauffolgenden (k+1)-ten Sendemodus vom Sendezeitgeber 8 zur ersten Speicherstufe 41 der Speichereinrichtung 4 vorzugsweise seriell über einen gemeinsamen Datenbus übertragen. Für diese serielle Übertragung der Sendezeitpunkte Tᵢⱼ(k+1) für den (k+1)-ten Sendemodus werden vom Sendezeitgeber 8 und von der ersten Speicherstufe 41 jeweils die zu den Sendezeitpunkte Tᵢⱼ(k+1) gehörigen Adressen Aᵢⱼ über einen nicht näher bezeichneten, (ld N + ld M)-Bit breiten Adreßbus ausgewählt. Bei einem Array 2 mit 4096 Wandlerelementen Eᵢⱼ genügt beispielsweise ein 12-Bit-Datenbus zum Auswählen der 4096 zugehörigen Adressen Aᵢⱼ. Die Anzahl der zu übertragenden Bits der für die binär kodierten Sendezeitpunkte Tᵢⱼ vorgesehenen Datenbusse hängt ab von der maximalen Zeitdifferenz zwischen dem frühesten Sendezeitpunkt und dem spätesten Sendezeitpunkt sowie von der Zeitauflösung, die dem kleinsten Zeitabstand zwischen den Sendezeitpunkten Tᵢⱼ zweier Wandlerelemente Eᵢⱼ entspricht. Beispielsweise ist bei einem maximalen Zeitunterschied von 15 µs und einer Zeitauflösung von 15 ns ein 10-Bit-Datenbus zum Übertragen der Sendezeitpunkte Tᵢⱼ erforderlich.

Im allgemeinen ist der Betrag der Pulsamplituden (Pulshöhen) der Sendepulse Pᵢⱼ für alle Wandlerelemente Eᵢⱼ gleich und liegt beispielsweise zwischen 100 V und 200 V. Auch die zeitliche Länge der einzelnen Sendepulse Pᵢⱼ ist in der Regel gleich groß. Die Wandlerelemente Eᵢⱼ können allerdings auch zur Apodisierung des Arrays 2 unterschiedlich stark angeregt werden. Es sind dann Pulse Pᵢⱼ unterschiedlicher Form, insbesondere unterschiedlicher Pulshöhen und unterschiedlicher Polarität, vorgesehen. Die Informationen zu den für die einzelnen Wandlerelemente Eᵢⱼ in Betrag und Vorzeichen im allgemeinen unterschiedlichen Pulsamplituden werden dann vorzugsweise von einem nicht dargestellten Sendepulsamplitudengeber dem Sendepulsgenerator 3 zugeführt.

Sobald der letzte Sendepuls Pᵢⱼ vom Sendepulsgenerator 3 gesendet worden ist, wird vom Sendemodus in einen Empfangsmodus umgeschaltet. Die Schaltmittel 7 verbinden dann die einzelnen Wandlerelemente Eᵢⱼ des Arrays 2 über die zugeordneten Duplexer Wᵢⱼ mit dem Multiplexer 9. Im Empfangsmodus trifft nun vom Objekt reflektierter Ultraschall auf das Array 2 und erzeugt in den Wandlerelementen Eᵢⱼ elektrische Spannungen, die als elektrische Empfangssignale Sᵢⱼ ausgelesen werden können. Der Multiplexer 9 faßt eine Gruppe von Empfangssignalen Sᵢⱼ in einem Multiplexsignal M_{q} zusammen mit 1 ≤ q ≤ Q und der Anzahl Q von Multiplexsignalen M_{q}. Vorzugsweise faßt der Multiplexer 9 jeweils die gleiche Anzahl F von Empfangssignalen Sᵢⱼ verschiedener Wandlerelemente Eᵢⱼ zu einem Multiplexsignal M_{q} zusammen. Diese Anzahl F wird auch als Multiplexfaktor bezeichnet. Der Multiplexer 9 kann ein Frequenzmultiplexer oder auch ein Zeitmultiplexer sein. Beim Frequenzmultiplexen wird eine Gruppe von gemultiplexten Empfangssignalen über verschiedene Frequenzbänder zeitlich simultan übertragen. Beim Zeitmultiplexen werden die Empfangssignale Sᵢⱼ zunächst abgetastet und die Abtastwerte einer Multiplexgruppe von Empfangssignalen Sᵢⱼ zeitlich hintereinander seriell übertragen (Datenbursts). Zeitmultiplex- und Frequenzmultiplexverfahren sind beispielsweise aus Meincke, Grundlach, "Taschenbuch der Hochfrequenztechnik", 4. Auflage, Springer-Verlag (1986), Seiten O51 bis O54 und R1 bis R2 bekannt. Beim Zeitmultiplexverfahren kann durch spektrale Verschachtelungen die Gesamtbandbreite reduziert werden. Die Anzahl der Signalleitungen zum Übertragen der Empfangssignale Sᵢⱼ wird durch das Multiplexen im Multiplexer 9 erheblich reduziert. Beispielsweise sind bei einem Array 2 mit MxN=64x64=4096 Wandlerelementen Eᵢⱼ und einem Multiplexfaktor F=16 bereits 256 Empfangssignalleitungen für die 256 Multiplexsignale M_{q} mit 1 ≤ q ≤ 256 ausreichend gegenüber 4096 Leitungen ohne Multiplexen. Die Multiplexsignale M_{q} werden vom Multiplexer 9 zu einem Demultiplexer 10 übertragen. Der Demultiplexer 10 wandelt die gemultiplexten Signale M_{q} wieder in Einzelsignale Sᵢⱼ' um, die hinsichtlich ihrer Signalinformation den ursprünglichen Empfangssignalen Sᵢⱼ der Wandlerelemente Eᵢⱼ entsprechen. Diese vom Demultiplexer 10 wieder getrennten Empfangssignale Sᵢⱼ' werden der Signalverarbeitungseinheit 5 zugeführt und von der Signalverarbeitungseinheit 5 zum Aufbau eines Bildes des abzubildenden Objekts verwendet.

Es wird eine vorgegebene Anzahl von Sende-Empfangs-Zyklen mit jeweils einem Sendemodus und einem darauffolgenden Empfangsmodus durchgeführt. Das Objekt wird dabei mit einem vorzugsweise fokussierten Ultraschallstrahl abgetastet und die zu-rückreflektierten Ultraschallpulse werden für den Bildaufbau verwendet (electronic scan).

In der in FIG 2 dargestellten vorteilhaften Ausführungsform sind nun weitere Schaltmittel 14 vorgesehen, die aus ersten Schaltmitteln 14A und zweiten Schaltmitteln 14B aufgebaut sind. Die beiden Schaltmittel 14A und 14B sind über elektrische Leitungen Lᵣ mit dem Zählindex r mit 1 ≤ r ≤ R und der Leitungsanzahl R elektrisch verbunden. Die ersten Schaltmittel 14A sind mit der Speichereinrichtung 4, dem Sendepulsgenerator 3 und dem Multiplexer 9 elektrisch verbunden. Die zweiten Schaltmittel 14B sind mit dem Sendezeitgeber 8 sowie mit dem Demultiplexer 10 elektrisch verbunden. Die Schaltmittel 14 schalten im Sendemodus die Kontrollsignale des Steuersignalbus CS, die Sendezeitpunkte Tᵢⱼ(k+1) und die Adressen Aᵢⱼ auf die Signalleitungen Lᵣ. Im Empfangsmodus schalten die Schaltmittel 14 dagegen die Multiplexsignale M_{q} des Multiplexers 9 auf die Leitungen Lᵣ, so daß der Multiplexer 9 und der Demultiplexer 10 über die Leitungen Lᵣ elektrisch verbunden sind. Vorzugsweise ist die Anzahl R der Leitungen Lᵣ gleich der Anzahl Q der Multiplexsignale M_{q}. Die Schaltmittel 14 enthalten für diese Funktionen vorzugsweise elektronische Umschalter. Die Ausführungsform mit den Schaltmitteln 14 ist besonders vorteilhaft, wenn der Sendepulsgenerator 3, die Speichereinrichtung 4, der Multiplexer 9, die Schaltmittel 7 und das Array 2 sowie die ersten Schaltmittel 14A gemeinsam in einem Applikator (Wandlerkopf) integriert sind und dieser Applikator über einen lediglich die elektrische Leitungen Lᵣ umfassenden Kabelstrang mit den dann in einem Hauptgerät integrierten zweiten Schaltmittel 14B elektrisch verbunden ist. Die Sendezeitpunkte Tᵢⱼ(k) für einen aktuell laufenden k-ten Sendemodus werden dann aus der Speichereinrichtung 4 im Applikator ausgelesen, wahrend die Sendezeitpunkte Tᵢⱼ(k+1) für den nächsten (k+1)-ten Sendemodus über die Leitungen Lᵣ vom Hauptgerät zum Applikator übertragen werden. Somit werden praktisch die für die Übertragung der Multiplexsignale Mq im Empfangsmodus vorgesehenen Leitungen Lᵣ im Sendemodus zum Übertragen der Sendedaten verwendet. Vorzugsweise werden die Empfangssignale Sᵢⱼ von zwischen die Duplexer Wᵢⱼ und den Multiplexer 9 geschalteten Vorverstärkern vorverstärkt, so daß sie mit einer niederohmigen Quellimpedanz über die Leitungen Lᵣ geschickt werden können.

Da die Gesamtzeit eines Sendemodus im allgemeinen deutlich kürzer ist als die Empfangszeit eines Empfangsmodus, ist bei der Übertragung der Sendedaten während des vorhergehenden Sendemodus gemäß der Erfindung eine höhere Datentransferfrequenz erforderlich als bei Übertragung der Sendedaten wahrend des vorangegangenen Empfangsmodus. Bei eindimensionalen Arrays 2 mit im allgemeinen nicht wesentlich mehr als 130 Wandlerelementen Eⱼ bereitet dies keine Schwierigkeiten. Die Datentransferfrequenz liegt in diesen Fällen noch deutlich unter 20 MHz. Bei zweidimensionalen Arrays 2 ist die Anzahl der Wandlerelemente Eᵢⱼ jedoch deutlich größer, wodurch die Datentransferfrequenz entsprechend steigt. Es ist daher insbesondere für zweidimensionale Arrays 2 vorteilhaft, die Sendedaten für einen darauffolgenden Sendemodus parallel zu übertragen. Dazu können statt nur eines Datenbusses zum seriellen Übertragen der Sendezeitpunkte Tᵢⱼ(k+1) vom Sendezeitgeber 8 zur ersten Speicherstufe 41 der Speichereinrichtung 4 mehrere Datenbusse zur parallelen Übertragung mehrerer Sendezeitpunkte Tᵢⱼ(k+1) vorgesehen werden, beispielsweise Z = 16 Datenbusse. Die Datentransferfrequenz vermindert sich dann um den Faktor 1/Z. Bei beispielsweise 4096 Wandlerelementen Eᵢⱼ, einer Sendezeit von 15 µs und einer Anzahl Z = 16 von Datenbussen ergibt sich beispielsweise eine Datentransferfrequenz von 17 MHz, die für handelsübliche Speicher problemlos beherrschbar ist. Die für die parallele Datenübertragung erforderliche größere Anzahl von einzelnen digitalen Verbindungsleitungen vom Sendezeitgeber 8 zur ersten Speicherstufe 41 der Speichereinrichtung 4 kann problemlos von den vorhandenen Leitungen Lᵣ aufgebracht werden. Die Schaltmittel 14 sind dann entsprechend zu modifizieren.

Für die Speichereinrichtung 4 kann insbesondere ein Array aus zwei kaskadierten digitalen Speicherregistern (Latch-Register) als erste und zweite Speicherstufe 41 und 42 verwendet werden. Ein in der Speichereinrichtung 4 integrierter, nicht dargestellter Adreßdekodierer ermöglicht die serielle Ansteuerung jeder einzelnen Speicherzelle des als erste Speicherstufe 41 vorgesehenen Speicherregisters.

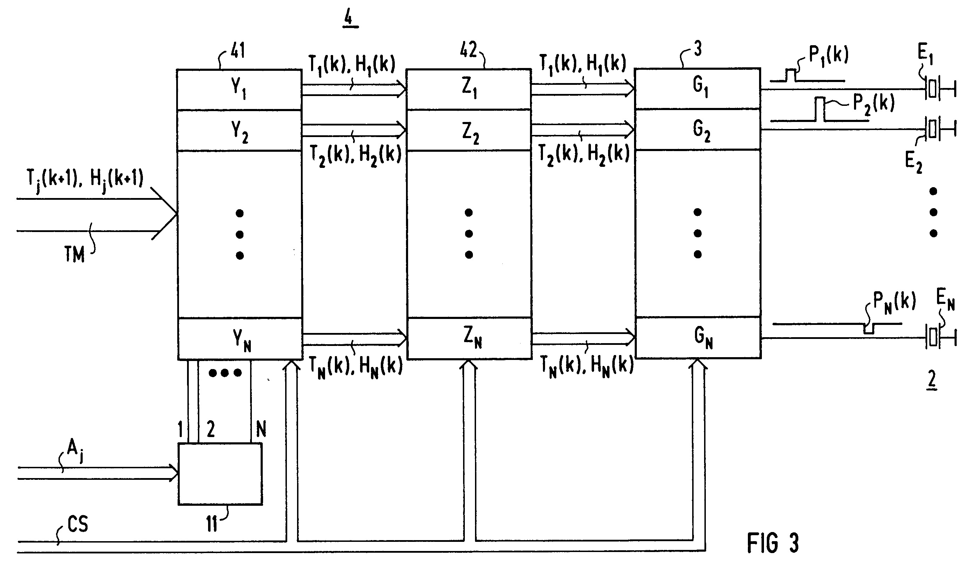

In FIG 3 sind die wesentlichen Teile der Sendeelektronik für ein Array 2 von Wandlerelementen Eⱼ dargestellt. Die Speichereinrichtung 4 umfaßt eine erste Speicherstufe 41 und eine zweite Speicherstufe 42. Die erste Speicherstufe 41 weist N einzelne Speicherzellen Yⱼ auf, die zweite Speicherstufe 42 weist entsprechend N Speicherzellen Zⱼ auf, wobei N wieder die Anzahl der Wandlerelemente Eⱼ ist und j von 1 bis N lauft. Ein Datenausgang jeder Speicherzelle Yⱼ der ersten Speicherstufe 41 ist mit einem Dateneingang einer entsprechenden Speicherzelle Zⱼ der zweiten Speicherstufe 42 über jeweils einen digitalen Datenbus verbunden. Außerdem sind die Datenausgange der Speicherzellen Zⱼ der zweiten Speicherstufe 42 mit jeweils einem Eingang eines Sendepulsgebers Gⱼ im Sendepulsgenerator 3 über jeweils einen Datenbus verbunden. Über die genannten Datenbusse können bei Anlegen eines Latch-Pulses über einen allen Speicherzellen Yⱼ und Zⱼ sowie den Sendepulsgebern Gⱼ gemeinsamen Steuersignalbus CS die Speicherinhalte der Speicherzellen Yⱼ der ersten Speicherstufe 41 in die zugeordneten Speicherzellen Zⱼ der zweite Speicherstufe 42 übertragen und an die jeweiligen Sendepulsgeber Gⱼ weitergeleitet werden. Ein weiterer Datenbus TM liegt parallel an den Dateneingängen der Speicherzellen Yⱼ der ersten Speicherstufe 41 an. Über diesen Datenbus TM werden vom nicht dargestellten Sendezeitgeber 8 kommende Sendedaten übertragen. Ein Adreßdekodierer 11 dekodiert von einem nicht dargestellten Adreßkodierer über einen Adreßdatenbus übertragene Adressen Aⱼ zur Auswahl der Speicherzelle Yⱼ, in die ein aktuell auf dem Datenbus TM liegendes Datenwort eingeschrieben wird.

Die einzelnen Speicherzellen Yⱼ und Zⱼ und die Datenbusse sind nun vorzugsweise so ausgelegt, daß nicht nur Sendezeitpunkte Tⱼ, sondern auch Pulsamplituden Hⱼ für die Sendepulse Pⱼ digital übertragen und gespeichert werden können. Durch eine individuelle Steuerung der Pulsamplituden Hⱼ kann das Array 2 apodisiert werden. Jeder Sendepulsgeber Gⱼ erzeugt im k-ten Sendemodus einen Sendepuls Pⱼ(k) für das zugehörige Wandlerelement Eⱼ des Arrays 2 und ist dazu mit dem zugeordneten Wandlerelement Eⱼ über einen nicht dargestellten Duplexer Wⱼ elektrisch verbindbar. Jeder Sendepuls Pⱼ(k) hat seine Startflanke beim Sendezeitpunkt Tⱼ (k) und eine Pulsamplitude Hⱼ(k) sowie im allgemeinen eine feste zeitliche Länge. Die einzelnen Sendepulse Pⱼ(k) sind schematisch eingezeichnet. Die Sendezeit Tⱼ(k) sowie die Pulsamplitude Hⱼ(k) für den Sendepuls Pⱼ(k) erhält jeder Sendepulsgeber Gⱼ aus der zugehörigen Speicherzelle Zⱼ der zweiten Speicherstufe 42.

Die Sendepulsgeber Gⱼ können beispielsweise mit jeweils einem programmierbaren Abwärtszahler gebildet sein. In einer bevorzugten Ausführungsform umfaßt jeder Sendepulsgeber Gⱼ des Sendepulsgenerators 3 einen digitalen Komparator und einen nachgeschalteten Pulsformer. An einen ersten Eingang des Komparators wird der zugehörige Sendezeitpunkt Tⱼ(k) aus der zugehörigen Speicherzelle Zⱼ der zweiten Speicherstufe 42 über den zugehörigen Datenbus angelegt. An einen zweiten Eingang des Komparators wird dagegen der Zählwert eines gemeinsamen Zählers angelegt. Ein Ausgang des Zählers ist dazu über einen allen Sendepulsgebern Gⱼ gemeinsamen Datenbus mit den zweiten Eingängen aller Komparatoren verbunden. Die über einen Clock-Puls eingestellte Zählfrequenz des Zählers wird durch die gewünschte zeitliche Auflösung im Sendemodus bestimmt. Wenn die beiden Datenwörter an den beiden Eingängen eines Komparators übereinstimmen, sendet dieser Komparator einen Triggerpuls an den zugehörigen Pulsformer. Der Pulsformer bildet aus dem Triggerpuls einen Sendepuls Pⱼ(k) für das zugehörige Wandlerelement Eⱼ. Der Triggerpuls definiert dabei die Startflanke des Sendepulses Pⱼ(k). Die Pulsamplitude Hⱼ(k) des Sendepulses Pⱼ(k) erhält der Pulsformer als digitalen Wert von der zugehörigen Speicherzelle Zⱼ der zweiten Speicherstufe 42. Die Pulslange der Sendepulse Pⱼ(k) für verschiedene Wandlerelemente Eⱼ wird im allgemeinen gleich gewählt. Der Pulsformer kann beispielsweise ein monostabiler Multivibrator mit steuerbarer Ausgangsamplitude sein.

In einer nicht dargestellten Ausführungsform können sowohl zum Starten Start-Triggerpulse als auch zum Beenden der Sendepulse Pⱼ Stop-Triggerpulse erzeugt werden. Zum Erzeugen der Stop-Triggerpulses sind für jedes Wandlerelement Eⱼ jeweils ein zweiter Komparator vorgesehen und ein allen Wandlerelementen Eⱼ gemeinsamer, gegenüber dem ersten Zählerbus zeitverzögerter Zählerbus.

Während die Sendepulsgeber Gⱼ des Sendepulsgenerators 3 ihre Sendepulse Pⱼ(k) im k-ten Sendemodus erzeugen, werden über den Datenbus TM bereits die Sendezeltpunkte Tⱼ(k+1) und die Pulsamplituden Hⱼ(k+1) für die Sendepulse Pⱼ(k+1) des (k+1)-ten Sendemodus übertragen und in den zugehörigen Speicherzellen Yⱼ der ersten Speicherstufe 41 gespeichert. Die Zuweisung der seriell übertragenen Sendedaten zu den Speicherzellen Zⱼ wird mit Hilfe des Adreßdekodierers 11 vollzogen.

Obwohl in den anhand der Zeichnung beschriebenen Ausführungsbeispielen wahrend eines Sendemodus die Sendedaten des unmittelbar darauffolgenden Sendemodus übertragen und gespeichert wurden, können natürlich auch während eines laufenden Sendemodus die Sendezeitpunkte für einen der darauffolgenden Sendemoden, beispielsweise erst den übernächsten Sendemodus, gespeichert werden. Es kann dann eine entsprechend mehrstufig ausgebildete Speichereinrichtung 4 vorgesehen sein.

## Patentansprüche

1. Verfahren zum Abbilden eines Objekts mit Ultraschall mit folgenden Merkmalen:
a) es wird eine vorbestimmte Anzahl von Sende-Empfangs-Zyklen durchgeführt, wobei wahrend jedes Sende-Empfangs-Zyklus
a1) zunächst in einem Sendemodus auf das Objekt richtbarer Ultraschall gesendet wird, indem für jedes Wandlerelement (Eⱼ,Eᵢⱼ) eines Arrays (2) von Wandlerelementen (Eⱼ,Eᵢⱼ) ein zugehöriger Sendezeitpunkt (Tⱼ(k),Tᵢⱼ(k)) aus einer Speichereinrichtung (4) ausgelesen wird und jedes Wandlerelement (Eⱼ,Eᵢⱼ) des Arrays (2) zu dem zugehörigen Sendezeitpunkt (Tⱼ(k),Tᵢⱼ(k)) mit einem zugehörigen Sendepuls (Pj) angesteuert wird, und
a2) danach in einem Empfangsmodus vom Objekt reflektierter Ultraschall von den Wandlerelementen (Eⱼ,Eᵢⱼ) in elektrische Empfangssignale (Sⱼ) umgewandelt wird;
b) während des Sendemodus jedes Sende-Empfangs-Zyklus werden die Sendezeitpunkte (Tⱼ(k+1),Tᵢⱼ(k+1)) für den Sendemodus eines der darauffolgenden Sende-Empfangs-Zyklen in die Speichereinrichtung (4) eingeschrieben;
c) die aus den Sende-Empfangs-Zyklen erhaltenen Empfangssignale (Sⱼ) der Wandlerelemente (Eⱼ,Eᵢⱼ) werden zum Aufbau eines Bildes des Objekts verwendet.

2. Verfahren nach Anspruch 1, bei dem während des Sendemodus jedes Sende-Empfangs-Zyklus die Sendezeitpunkte (Tⱼ(k+1), Tij(k+1)) für den Sendemodus des unmittelbar darauffolgenden Sende-Empfangs-Zyklus in die Speichereinrichtung (4) eingeschrieben werden.

3. Verfahren nach einem der vorhergehenden Ansprüche, bei dem mehrere Sendezeitpunkte (Tⱼ(k+1),Tᵢⱼ(k+1)) für verschiedene Wandlerelemente (Eⱼ,Eᵢⱼ) zeitlich parallel in die Speichereinrichtung (4) eingeschrieben werden.

4. Verfahren nach einem der vorhergehenden Ansprüche, bei dem mehrere Sendezeitpunkte (Tⱼ(k+1),Tᵢⱼ(k+1)) für verschiedene Wandlerelemente (Eⱼ,Eᵢⱼ) zeitlich hintereinander in die Speichereinrichtung (4) eingeschrieben werden.

5. Verfahren nach einem der vorhergehenden Ansprüche, bei dem wahrend des Sendemodus jedes Sende-Empfangszyklus auch Pulsamplitudenwerte (Hⱼ(k+1)) für die Sendepulse (Pⱼ(k+1)) des Sendemodus eines der darauffolgenden Sende-Empfangs-Zyklen in die Speichereinrichtung (4) geschrieben werden.

6. Verfahren nach einem der vorhergehenden Ansprüche, bei dem die Empfangssignale (Sⱼ) der Wandlerelemente (Eᵢⱼ) und die Sendezeitpunkte (Tᵢⱼ) über gemeinsame Leitungen (Lᵣ) übertragen werden.

7. Anordnung zum Abbilden eines Objekts mit Ultraschall mit
a) einem Array (2) von Wandlerelementen (Eⱼ,Eᵢⱼ),
b) einer Speichereinrichtung (4),
c) einem Sendepulsgenerator (3), der in einer vorbestimmten Anzahl von Sendemoden zum Senden von auf das Objekt richtbarem Ultraschall die Wandlerelemente (Eⱼ,Eᵢⱼ) des Arrays (2) mit jeweils einem Sendepuls (Pⱼ) zu jeweils einem in der Speichereinrichtung (4) gespeicherten Sendezeitpunkt (Tⱼ(k),Tᵢⱼ(k)) ansteuert,
d) einem Sendezeitgeber (8), der wahrend jedes Sendemodus die Sendezeitpunkte (Tⱼ(k+1),Tᵢⱼ(k+1)) für einen der darauffolgenden Sendemoden in die Speichereinrichtung (4) schreibt, und mit
e) einer Signalverarbeitungseinheit (5), die zum Aufbau eines Bildes des Objekts elektrische Empfangssignale (Sⱼ) verarbeitet, die von den Wandlerelementen (Eⱼ,Eᵢⱼ) in jeweils unmittelbar an jeden Sendemodus anschließenden Empfangsmoden aus vom Objekt reflektierten Ultraschall erzeugt werden.

8. Anordnung nach Anspruch 7, bei der der Sendezeitgeber (8) die Sendezeitpunkte (Tⱼ(k+1),Tᵢⱼ(k+1)) zeitlich hintereinander in die Speichereinrichtung (4) schreibt.

9. Anordnung nach Anspruch 7, bei der der Sendezeitgeber (8) mehrere Sendezeitpunkte (Tⱼ(k+1),Tᵢⱼ(k+1)) für verschiedene Wandlerelemente (Eⱼ,Eᵢⱼ) zeitlich parallel in die Speichereinrichtung (4) schreibt.

10. Anordnung nach einem der Ansprüche 7 bis 9, bei der der Sendezeitgeber (8) wahrend jedes Sendemodus die Sendezeitpunkte (Tⱼ(k+1),Tᵢⱼ(k+1)) für den unmittelbar darauffolgenden Sendemodus in die Speichereinrichtung (4) schreibt.

11. Anordnung nach Anspruch 10, bei der
a) die Speichereinrichtung (4) eine erste Speicherstufe (41) und eine zweite Speicherstufe (42) enthalt,
b) während jedes Sendemodus
b1) der Sendepulsgenerator (3) für jedes Wandlerelement (Eⱼ) den für diesen Sendemodus vorgesehenen Sendezeitpunkt (Tⱼ(k)) der zweiten Speicherstufe (42) der Speichereinrichtung (4) entnimmt und bei der
b2) der Sendezeitgeber (8) die für den darauffolgenden Sendemodus vorgesehenen jeweiligen Sendezeitpunkte (Tⱼ(k+1)) für die Wandlerelemente (Eⱼ) in die erste Speicherstufe (41) der Speichereinrichtung (4) schreibt.

12. Anordnung nach einem der Ansprüche 7 bis 11, bei der Schaltmittel (14) vorgesehen sind zum Verbinden des Arrays (2) mit der Signalverarbeitungseinheit (5) in jedem Sendemodus und des Sendezeitgebers (8) mit der Speichereinrichtung (4) in jedem Empfangsmodus über gemeinsame Leitungen (Lᵣ).

13. Anordnung nach einem der Ansprüche 7 bis 12, bei der ein zweidimensionales Array (2) vorgesehen ist.

14. Anordnung nach einem der Ansprüche 7 bis 12, bei der ein eindimensionales Array (2) vorgesehen ist.
